# EUROPEAN PATENT APPLICATION

(11) **EP 2 963 860 A1**
(43) Date of publication of application: **06.01.2016**
(21) Application number: 13876580.5
(22) Date of filing: 28.02.2013
(51) Int. Cl.: H04L 12/28

(54) **INFORMATION PROCESSING DEVICE AND START-UP CONTROL PROGRAM**

(71) Applicant: Fujitsu Limited, Kawasaki-shi, Kanagawa 211-8588 (JP)
(72) Inventor: UCHIDA, Yoshiaki, Kawasaki-shi Kanagawa 211-8588 (JP)
(74) Representative: Schultes, Stephan
(86) International application number: PCT/JP2013/055589
(87) International publication number: WO 2014/132428

(57) **Abstract**

An information processing apparatus receives, in a state of an electrical power saving mode that limits a function, a control packet that includes therein control information indicating a device or an application that is a startup target by an arbitrary number of times within a predetermined time period. Then, when the control packet is received, the information processing apparatus starts up a control program that starts up each device or each application. Thereafter, when the information processing apparatus receives the control packet after the control program is started up, the information processing apparatus starts up, by using the control program, the device or the application that is the startup target specified by the control information included in the control packet.

## Description

### [Technical Field]

The embodiments discussed herein are directed to an information processing apparatus and a startup control program.

### [Background Art]

In recent years, it has become common to use personal computers (hereinafter, sometimes referred to as home servers) for a home use as servers and access a server in one's home from a transportable terminal, such as a smart phone, a portable-type personal computer, or the like.

In this case, it is conceivable that power distribution of a home server is made to an always on state in order to keep a state in which the home server can be accessed from outside. However, in general, because home servers are not designed under the assumption of 24-hour operation, there is a concern in terms of the life or a safety due to the power distribution. In contrast, if a home server is used in such a purpose, the number of users is usually small and that server is less frequently accessed.

In contrast, there is a known technology that utilizes a home server in an electrical power saving mode. For example, there is a known technology in which a home server changes the electrical power saving mode in accordance with schedule information created by a user of the remaining battery level or in accordance with the remaining amount of a battery.

Furthermore, there is a technology in which, a home server is made to an electrical power saving state or a halt state at the time of standby state and, when a Wake On LAN (WOL) packet is received, the power supply of the home server is turned on and is made to a normal operation state. Furthermore, there is a technology that releases the electrical power saving mode by a user operating a home server using signals of an infrared remote control or the like or using various sensors or detecting that a user approaches. After the home server enters the normal operation state, the power supply of a built-in device or each externally connected electronic device is turned on or off and then the devices enter an electrical power mode.

### [Citation List]

### [Patent Literature]

Patent Literature 1: Japanese Laid-open Patent Publication No. 2012-080562
Patent Literature 2: Japanese Laid-open Patent Publication No. 11-345051
Patent Literature 3: Japanese Laid-open Patent Publication No. 2004-110455
Patent Literature 4: Japanese Laid-open Patent Publication No. 2010-154318
Patent Literature 5: Japanese Laid-open Patent Publication No. 2004-334585

### [Summary of invention]

### [Technical Problem]

However, with the technologies described above, there is a problem in that convenience is low when a server in a network is remotely operated.

For example, when the server in the network receives a WOL packet from a mobile terminal after the server was in the electrical power saving mode, the server starts up built-in devices included in the server and all external devices that are connected to the server. Consequently, it takes time to start up the server. Furthermore, a mobile terminal is not able to send a packet that includes therein a specific processing content only after all of the devices connected to the server are started up. Consequently, a user needs to be accurately aware of the state of a home server and thus convenience is low when a specific function is executed after the server was in the electrical power saving mode.

A user needs to send the processing content after the user accurately checks the state of the home server, i.e., checks whether the home server has been started up. In this way, because a response obtained after the WOL packet was sent from the mobile terminal is slow and the user needs to be aware of the state of the home server, convenience is low when a specific function is performed after the electrical power saving mode.

Accordingly, the present invention has been conceived in light of the circumstances described above, and an object thereof is to provide an information processing apparatus and a startup control program that can improve convenience when a server in a network is remotely operated.

### [Solution to Problem]

According to an aspect of the embodiments, an information processing apparatus includes a receiving unit that receives, in a state of an electrical power saving mode that limits a function, a control packet that includes therein control information indicating a device or an application that is a startup target by an arbitrary number of times within a predetermined time period; a first startup control unit that starts up, when the control packet is received by the receiving unit, a control program that starts up each device or each application; and a second startup control unit that starts up, by using the control program when the receiving unit receives the control packet after the control program is started up by the first startup control unit, the device or the application that is the startup target specified by the control information included in the control packet.

### [Advantageous Effects of Invention]

According to an aspect of the embodiment of an information processing apparatus and a startup control program according to the present invention, an advantage is provided in that it is possible to improve convenience when a server in a network is remotely operated.

### [Brief Description of Drawings]

FIG. 1 is a schematic diagram illustrating an example of the overall configuration of a system according to a first embodiment.
FIG. 2 is a block diagram illustrating the hardware configuration of a mobile terminal according to the first embodiment.
FIG. 3 is a block diagram illustrating the hardware configuration of a home server and examples of devices connected to the home server.
FIG. 4 is a functional block diagram illustrating the functional configuration of the home server according to the first embodiment.
FIG. 5 is a schematic diagram illustrating an example of information stored in a list DB.
FIG. 6 is a schematic diagram illustrating a control packet according to the first embodiment.
FIG. 7 is a sequence diagram illustrating the flow of a process according to the first embodiment.
FIG. 8 is a flowchart illustrating the flow of a process performed by the home server according to the first embodiment.
FIG. 9 is a sequence diagram illustrating the flow of a process according to a conventional technology.
FIG. 10 is a functional block diagram illustrating the functional configuration of a home server according to a second embodiment.
FIG. 11 is a schematic diagram illustrating an example of information stored in a schedule DB.
FIG. 12 is a flowchart illustrating the flow of an estimating process performed by a device or the like according to the second embodiment.
FIG. 13 is a flowchart illustrating the flow of a process performed by a home server according to a third embodiment.
FIG. 14 is a schematic diagram illustrating an example of the overall configuration of a system including therein a home server according to a fourth embodiment.
FIG. 15 is a flowchart illustrating the flow of a power supply process performed by a monitoring unit according to the fourth embodiment.

### [Embodiments for Carrying Out the Invention]

Preferred embodiments of an information processing apparatus and a startup control program according to the present invention disclosed in the present invention will be described in detail below with reference to the accompanying drawings. The present invention is not limited to the embodiments.

### [a] First Embodiment

### [Overall configuration]

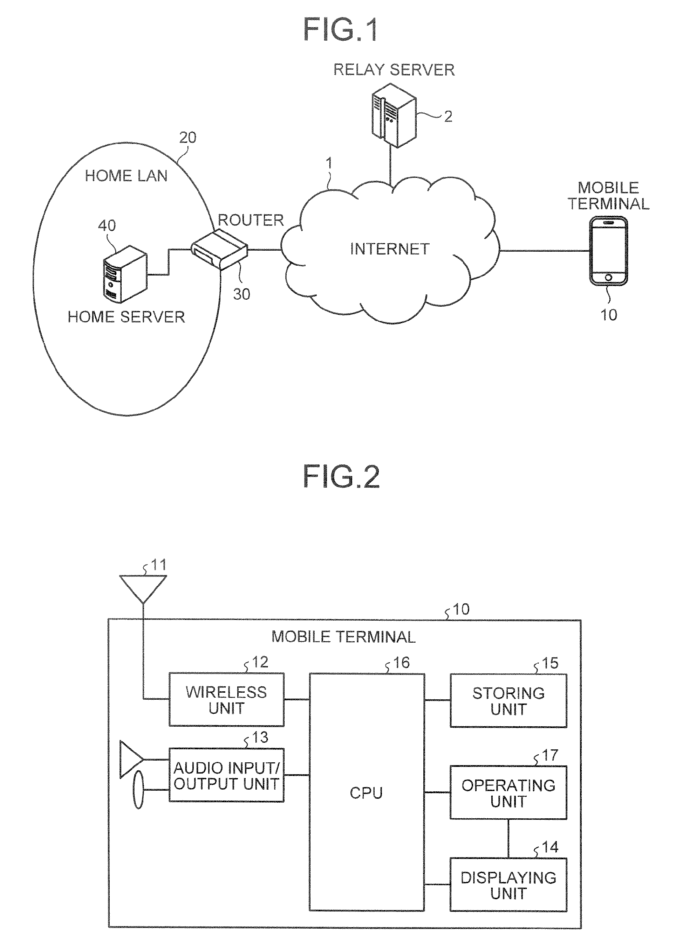

FIG. 1 is a schematic diagram illustrating an example of the overall configuration of a system according to a first embodiment. As illustrated in FIG. 1, in this system, a relay server 2, a mobile terminal 10, and a home LAN 20 are connected via a network, such as an Internet 1 or the like.

The mobile terminal 10 is an example of a transportable terminal that is held and used by a user. The home LAN 20 is an example of a network owned by the user of the mobile terminal 10. The home LAN 20 includes a router 30 and a home server 40. Furthermore, the home LAN 20 may also include various kinds of devices other than the devices illustrated in the drawing. Furthermore, an Internet Protocol (IP) address is allocated to each of the devices in the home LAN 20 and communication can be performed between the devices in the home LAN. Normally, the IP address allocated at this stage is a private IP address. Furthermore, communication can be performed with an external device via the router 30 that has a global address.

The router 30 relays communication between devices in a home LAN or between a device in a home LAN and an external device by performing the routing or network address translation (NAT). For example, the router 30 converts a packet that has been sent to the global IP address held by the router 30 to the private IP address that is allocated to the home server 40, whereby the router 30 relays the communication between the home server 40 and the mobile terminal 10.

The home server 40 is an example of a home server used by a user of the mobile terminal 10 and performs various processes in response to an access from a transportable terminal, such as the mobile terminal 10. Furthermore, if, for example, a packet is not sent or received for a certain time period, the home server 40 shifts to an electrical power saving mode. In the electrical power saving mode, the home server 40 supplies electrical power to the minimum number of devices, such as a LAN interface or the like and suppresses a power supply of the other built-in devices, applications, external devices, and the like.

The relay server 2 is an example of a server that manages, in order to relay a packet from a transportable terminal, a path (particularly, a global IP address or the like) for accessing a home server used by a user. For example, the relay server 2 holds a global IP address of the router 30 that is connected to the home server 40 and holds a port number that is used to access the home server 40. Then, if the relay server 2 receives an inquiry about an IP address from the mobile terminal 10, the relay server 2 sends, as a response, the IP address and the port number. If the home server 40 has a global IP address, the relay server 2 holds that global IP address and responds to the mobile terminal 10.

In this state, in the state of the electrical power saving mode that limits functions, the home server 40 receives, from the mobile terminal 10, a plurality of control packets each of which includes therein control information indicating a device or an application that is a startup target. At this time, when the home server 40 receives a control packet for the first time, the home server 40 starts up the server itself. Consequently, the home server 40 prepares a startup of each or the devices or applications needed in accordance with the process requested by the mobile terminal 10. Specifically, the home server 40 starts up a control program that has a function of starting up these devices or applications. Thereafter, if the home server 40 receives the control packet sent from the mobile terminal 10 after the control program was started up, the home server 40 starts up, by using the control program, the device or the application that is the startup target and that is specified by the control information included in the control packet. At this time, it is to be noted that the processes performed in the mobile terminal 10 are only processes of repeatedly sending same control packets.

As described above, the home server 40 repeatedly receives control packets, such as a control packet indicating turning on the power supply and a startup target and starts up the control program first time. When a control packet is received after the control program was started up, the control program starts up the startup target. Consequently, the home server 40 can improve convenience when a specific function is performed after the server was in the electrical power saving mode.

### [Configuration of each device]

In the following, the configuration of each of the devices illustrated in FIG. 1 will be described. The relay server 2 has the same functional configuration as that performed by commonly used domain name system (DNS) servers or dynamic host configuration protocol (DHCP) servers and the router 30 has the same functional configuration as that performed by commonly used routers. Accordingly, in the following, the mobile terminal 10 and the home server 40 will be described.

### (Configuration of the mobile terminal)

FIG. 2 is a block diagram illustrating the hardware configuration of a mobile terminal according to the first embodiment. As illustrated in FIG. 2, the mobile terminal 10 includes an antenna 11, a wireless unit 12, an audio input/output unit 13, a displaying unit 14, a storing unit 15, a central processing unit (CPU) 16, and an operating unit 17.

The antenna 11 sends and receives radio waves. The wireless unit 12 is a processing unit that performs wireless communication via the antenna 11. The audio input/output unit 13 is a processing unit that performs an input or an output of voices. The displaying unit 14 is a display device that displays various kinds of information and is, for example, a display or a touch panel.

The storing unit 15 is a storage device, such as a memory, a hard disk, or the like, and performs various programs. The CPU 16 is a processing unit that manages the entirety of the mobile terminal 10, reads a subject program from the storing unit 15, and executes the program.

For example, the CPU 16 receives a specification of the startup target from a user. Then, the CPU 16 creates a control packet to which an identifier that is used to identify a device or an application specified as the startup target is added and sends the created control packet to the home server 40. In a state assumed in the present invention, because a control packet is sent when the home server 40 is in a halt state, there may be a case in which a response from the home server 40 may not be expected. Thus, it is important to perform transmission by using a user datagram protocol (UDP) instead of a transmission control protocol (TCP). The CPU 16 can send a control packet by using a UDP. In this case, the CPU 16 sends the control packet for, for example, two minutes, at an interval of 20 seconds. Hereinafter, a device or an application may sometimes be referred to as a "device or the like".

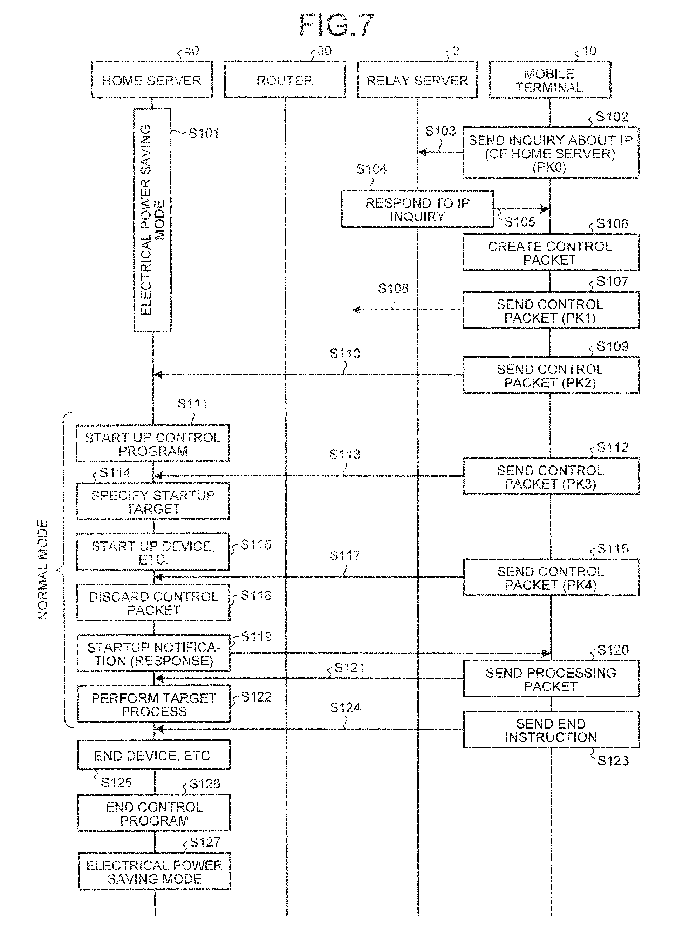

Furthermore, the CPU 16 can also create a processing packet that includes therein, in addition to the identifier described above, specific processing content and send the created processing packet to the home server 40. Similarly, the CPU 16 can send the processing packet by using a UDP. In this case, the CPU 16 sends the processing packet for, for example, three minutes at an interval of 15 seconds. The time periods and intervals described here are only examples. Furthermore, as illustrated in FIG. 7, the CPU 16 inquires of the relay server about the IP address that is used to perform communication with the home server and then sends a processing packet by using the IP address to the home server 40. Consequently, the CPU 16 can send the processing packet to the home server 40.

The operating unit 17 is a processing unit that receives an operation performed by a user via the displaying unit 14 or the like. For example, the operating unit 17 receives an operation performed by a user who operates a keyboard, a mouse, a touch panel, or the like and outputs information related to the received operation to the CPU 16.

### (Configuration of the home server)

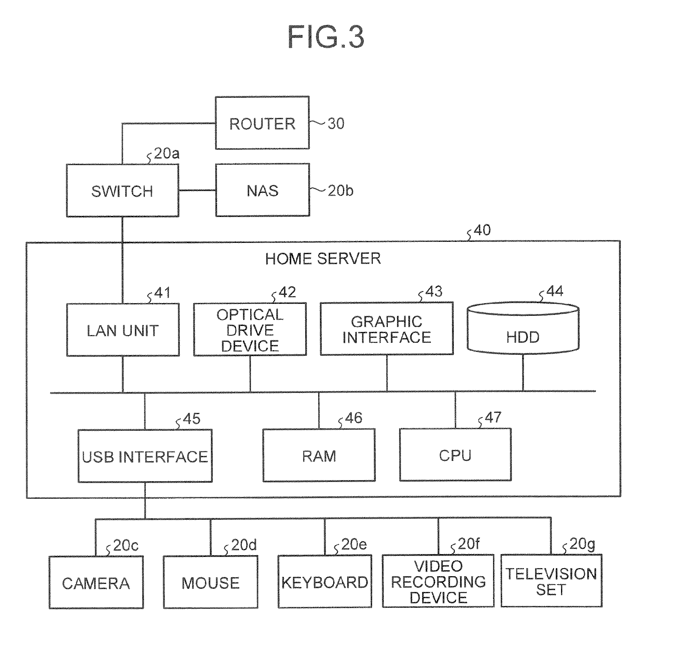

FIG. 3 is a block diagram illustrating the hardware configuration of a home server and examples of devices connected to the home server. As illustrated in FIG. 3, the home server 40 includes a LAN unit 41, an optical drive device 42, a graphic interface 43, a hard disk drive (HDD) 44, and a universal serial bus (USB) interface 45. Furthermore, the home server 40 includes a random access memory (RAM) 46 and a CPU 47.

Furthermore, an IP address that is unique in the LAN is allocated to each of the built-in devices included in the home server 40 or the external devices provided outside the home server 40. With this IP address, it is possible to specify a destination device, i.e., a device targeted for the processing.

The LAN unit 41 is an interface that performs communication with another device. The LAN unit 41 is connected to the router 30 via a switch 20a and performs communication with a device outside the home LAN 20 via the switch 20a and the router 30. Furthermore, the LAN unit 41 is connected to network attached storage (NAS) 20b in the home LAN 20 via the switch 20a and performs transmission and reception of data with the NAS 20b.

The optical drive device 42 is a drive device that reads an optical disk, such as a compact disc (CD), a digital versatile disc (DVD), a blu-ray disc (BD), or the like; that writes data to the optical disk; and that reads data from the optical disk.

The graphic interface 43 is an interface that is connected to the display device, such as a display, a touch panel, or the like. The HDD 44 is a storage device that stores therein programs or databases and stores therein, for example, control programs that start up each of the devices or the applications.

The USB interface 45 is an interface for connecting the home server 40 to the other devices in the home LAN 20. For example, the USB interface 45 is connected to a camera 20c, a mouse 20d, a keyboard 20e, a video recording device 20f, and a television set 20g.

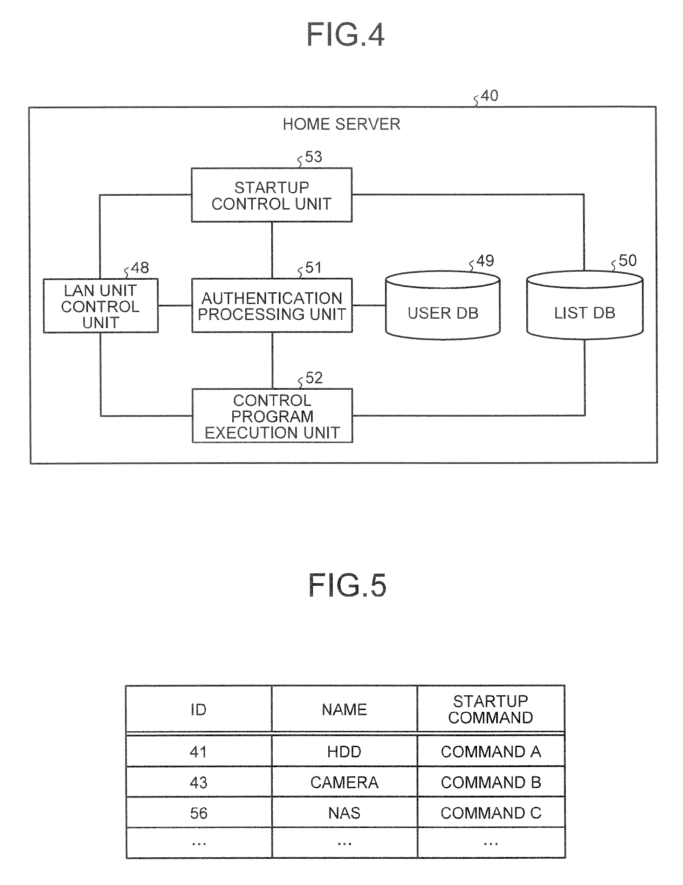

The RAM 46 is a storage device using a semiconductor element and is a main memory of the home server 40. The CPU 47 is a processing unit that manages the entirety of the home server 40. The CPU 47 reads a program from the HDD 44, loads the program in the RAM 46, and executes various processes. For example, the CPU 47 reads a program that executes each of the processing units, which will be described with reference to FIG. 4 or the like; loads the program in the RAM 46; and executes various processes. Furthermore, the CPU 47 reads a control program from the HDD 44, loads the program in the RAM 46, and executes the program.

Furthermore, the CPU 47 executes the application program stored in each of the devices built in the home server 40, the HDD 44, or the like, and executes the control program that starts up the devices connected to the USB interface 45 or the LAN unit 41. Furthermore, the CPU 47 operates the execution of the control program and controls the various devices or the applications.

When the home server 40 is in the electrical power saving mode, the CPU 47 is in a standby state in preparation for high-speed startup, i.e., is in a low electrical power state. Consequently, power is not supplied to the other peripheral devices other than the RAM and thus the peripheral devices enter the standby state. Furthermore, the CPU 47 can change a clock frequency, disable a part of a circuit, and also suppress electrical power consumption due to a tradeoff between the performances.

### (Functional configuration of the home server)

FIG. 4 is a functional block diagram illustrating the functional configuration of the home server according to the first embodiment. As illustrated in FIG. 4, the home server 40 includes a LAN unit control unit 48, a user DB 49, a list DB 50, an authentication processing unit 51, a control program execution unit 52, and a startup control unit 53.

The LAN unit control unit 48 is a processing unit implemented by the LAN unit 41 illustrated in FIG. 3. The user DB 49 and the list DB 50 are databases stored in the HDD 44. The authentication processing unit 51, the control program execution unit 52, and the startup control unit 53 are processing units implemented by the CPU 47 using the execution program and are processing units that can also be performed in the electrical power saving mode.

The LAN unit control unit 48 receives, in the state of the electrical power saving mode that limits functions, a plurality of control packets each of which includes therein control information indicating a device or an application that is a startup target within a predetermined time period. Namely, the LAN unit control unit 48 receives a plurality of control packets in each of which a UDP port number is specified. When the LAN unit control unit 48 receives a control packet, the LAN unit control unit 48 outputs the control packet to the authentication processing unit 51. If a reception interval of the control packets is long and a control packet is not delivered within a certain time period after the home server was started up by a single control packet, there may be a case in which a home server may again enter the electrical power saving mode (standby state); however, in the embodiment, such a long interval is not assumed.

The LAN unit control unit 48 is a processing unit that receives various packets other than the control packets and that outputs the received packets to the destination application or the like. Furthermore, the LAN unit control unit 48 may also output the various packets to the authentication processing unit 51 and perform the authentication process.

The user DB 49 is a database that stores therein user information on the home server 40. For example, the user DB 49 stores therein, in an associated manner, an identifier for identifying a user and a password specified by the user.

The list DB 50 is a database that stores therein the list of devices or applications performed by the remote operation from the mobile terminal 10 or the like. FIG. 5 is a schematic diagram illustrating an example of information stored in a list DB. As illustrated in FIG. 5, the list DB 50 stores therein, in an associated manner "the ID, the name, and the startup command".

The "ID" stored here is an identifier for identifying a device or an application. The "name" is a name of a device or an application. The "startup command" is a command that is used to start up a device or an application. The case illustrated in FIG. 5 indicates that the "HDD" identified by the ID "41" can be executed by a command A and indicates that the "camera" identified by the ID "43" can be executed by a command B.

Furthermore, FIG. 5 illustrates an example of associating devices or applications; however, the configuration is not limited thereto. For example, it is also possible to associate processing names, such as backup processes, video recording processes, or the like. In such a case, a processing name is associated with a command for a device or an application related to the execution of the subject process and then the association relationship is stored. For example, in a case of a backup process, by associating a command for the backup software with a command for the HDD, the backup process can be performed by a remote operation.

The authentication processing unit 51 is a processing unit that performs authentication by determining, when various packets are received, whether a packet is sent from a legitimate user. Specifically, the authentication processing unit 51 extracts a user ID and a password from the control packet received by the LAN unit control unit 48. Then, if the combination of the extracted user ID and the password is stored in the user DB 49, the authentication processing unit 51 permits the authentication and, if the combination is not stored, the authentication processing unit 51 rejects the authentication. If the authentication processing unit 51 permits the authentication, the authentication processing unit 51 outputs the control packet to the control program execution unit 52. Furthermore, if the authentication processing unit 51 rejects the authentication, the authentication processing unit 51 discards the control packet.

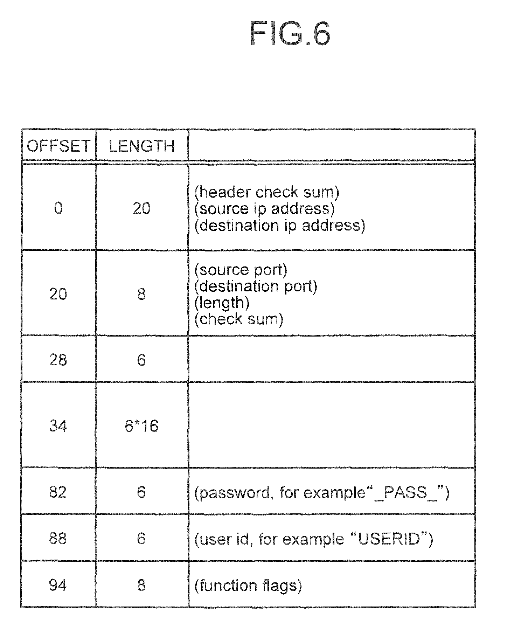

In the following, a description will be given of a control packet that is sent by the mobile terminal 10 and that is received by the home server 40. FIG. 6 is a schematic diagram illustrating a control packet according to the first embodiment. The information illustrated in FIG. 6 is information included in the control packet. Specifically, in the control packet, 20 bits from the top corresponds to the IP header, in which a send source IP address, a destination IP address, and a checksum are set. Furthermore, the position of the offset "20" in the control packet, i.e., 28 bits after 21 bits in the control packet, corresponds to a UDP header, in which a port number of the send source or a port number of the destination is set.

Furthermore, the position of the offset "28" in the control packet, i.e., 34 bits after 29 bits in the control packet, corresponds to a starting mark of the control packet. At the position of the offset "34" in the control packet, a MAC address that is targeted for the control is set by using 6 bits and is repeatedly set 16 times. Furthermore, at the position of the offset "82" in the control packet, a user password is set by using 6 bits.

Furthermore, at the position of the offset "88" in the control packet, the user ID is set by using 6 bits. At the position of the offset "94" in the control packet, a device targeted for a startup or the like is set by using 8 bits. The value corresponding to the ID in the list DB 50 illustrated in FIG. 5 is set in the value of the offset "94".

A description will be given here by referring back to FIG. 4. If the control packet is received by the LAN unit control unit 48, the control program execution unit 52 is a processing unit that starts up the control program that is used to start up each of the devices or the applications.

Specifically, if the control packet is received by the LAN unit control unit 48 and the authentication is determined to be permitted by the authentication processing unit 51, the control program execution unit 52 reads the control program from the HDD 44 or the like, loads the program in the RAM 46, and executes the control program. Furthermore, the control program execution unit 52 notifies each of the processing units of the completion of the execution of the control program.

Namely, because the control packet sent from the mobile terminal 10 functions as a Wake On LAN magic packet, the home server 40 performs the control program and enters the state that can start up each of the devices or the applications.

If the LAN unit control unit 48 receives the control packet after the control program was started up by the control program execution unit 52, the startup control unit 53 is a processing unit that starts up, by using the control program, a device or the like targeted for a startup specified by the control packet.

Specifically, if a control packet is received and authentication is permitted after the control program was started up by the control program execution unit 52, the startup control unit 53 extracts a value from the position of the offset "94" in the control packet. Then, the startup control unit 53 specifies a command associated with the extracted value from the list DB 50. Thereafter, the startup control unit 53 allows the control program to execute the specified command.

Namely, in a state in which the control program is started up, if a control packet that is the same control packet as that executes the control program is received, the control program executes a device or the like specified by the received control packet. For example, if 'V' (0x56) is set in the control packet, the control program executes, on the NAS 20b, a startup command C for the NAS via the LAN unit control unit 48 and starts up the NAS 20b. If only `V' (0x56) is set, the devices or the applications other than the NAS 20b remain in the standby state.

### [Flow of a process]

In the following, a description will be given of a processing sequence performed by the system according to the first embodiment, the flowchart executed by the home server 40, and the processing sequence according to the conventional technology.

### (Processing sequence according to the first embodiment)

FIG. 7 is a sequence diagram illustrating the flow of a process according to the first embodiment. As illustrated in FIG. 7, the home server 40 operates in the electrical power saving mode (Step S101). For example, the home server 40 supplies a power supply to the LAN unit 41 and suppresses a supply of the power supply to the other hardware devices or the like.

In this state, the mobile terminal 10 sends, to the relay server 2, a packet (PK0) that inquires the IP address of the home server 40 (in practice, the global IP address of the router 30) (Steps S102 and S103). In response to the inquiry from the mobile terminal 10, the relay server 2 sends, as a response, the IP address of the home server 40 (in practice, the global IP address of the router 30) (Steps S104 and S105).

Then, the mobile terminal 10 creates a control packet that includes therein the ID for identifying a device or the like targeted for a startup (Step S106) and sends the same control packet for multiple times within a predetermined time period.

Specifically, the mobile terminal 10 sends a control packet (PK1) (Steps S107 and S108). However, because the communication is performed by using a UDP, there may be a case in which the control packet may not be delivered to the home server 40. Here, it is assumed that the PK1 is lost on the way and is not arrive at the home server 40.

After a little interval, the mobile terminal 10 sends a control packet (PK2) (Steps S109 and S110). It is assumed that this PK2 was received by the LAN unit control unit 48 in the home server 40. Then, if an authentication process or the like is performed by the authentication processing unit 51, the control program execution unit 52 starts up the control program (Step S111). There may be a case in which, of course, the PK1 is delivered to the home server 40 and, when the PK1 is received as a trigger, the control program is started up or there may be a case in which both the PK1 and the PK2 are lost and the subsequent packet is delivered to the home server 40.

After a little further interval, the mobile terminal 10 sends a control packet (PK3) (Steps S112 and S113). It is assumed that, at this time point, the control program has already been started up. Consequently, the startup control unit 53 recognizes the startup target in the control packet (Step S114) and starts up that startup target by using the control program (Step S115). Namely, the startup control program only starts up a device or the like that is indicated by the control packet. The other devices or the like still remain in the standby state. There may be a case in which, when the PK3 arrives, the control program has not yet been started up. In this case, the above described operation shall be performed when a subsequent packet (PK4) arrives.

After further predetermined time period, the mobile terminal 10 sends the control packet (PK4) (Steps S116 and S117). At this time point, because the control program has already been started up, the PK4 is discarded by the LAN unit 42 (Step S118). Then, the startup control unit 53 in the home server 40 notifies the mobile terminal 10 of the completion of the startup of the target device (Step S119).

Thereafter, if the transmission of the control packet is ended, in response to the operation of a user or the like, the mobile terminal 10 creates a processing packet that includes therein the content of processing performed by using the device or the like that was started up by the control packet and sends the processing packet to the home server 40 (Steps S120 and S121).

Then, the startup control unit 53 in the home server 40 performs, by using the device or the like that was started up by the control program, the process specified by the processing packet received from the mobile terminal 10 (Step S122).

Thereafter, if a packet indicating the end of the process is sent from the mobile terminal 10 and no process to be performed by the home server 40 is left (Steps S123 and S124), the startup control unit 53 in the home server 40 makes the started up devices or the like to the standby state (Step S125). Then, the startup control unit 53 ends the control program (Step S126). Consequently, the home server 40 again enters the electrical power saving mode (Step S127).

If the processing content indicated by the control packets (the PK1 to the PK4) is simple and there is no need to receive a response from the mobile terminal 10, the home server 40 may enter the standby state after the completion of this process. For example, an instruction to turn on/off a home appliance corresponds to this case.

### (Flowchart according to the first embodiment)

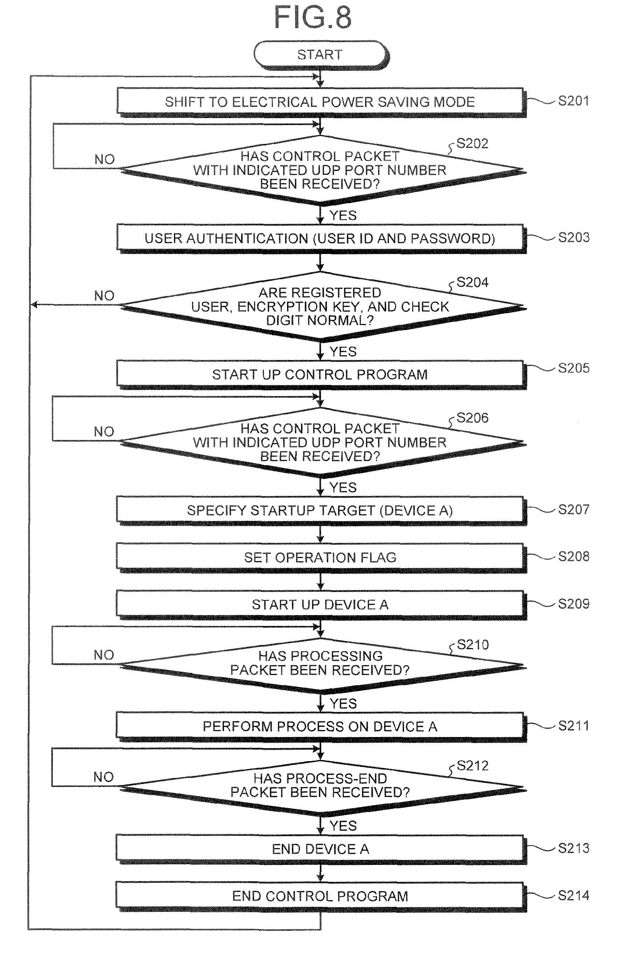

FIG. 8 is a flowchart illustrating the flow of a process performed by the home server according to the first embodiment. As illustrated in FIG. 8, if, for example, the home server 40 does not receive a packet for a predetermined time period and does not have any process to be executed for a predetermined time period, the home server 40 shifts to the electrical power saving mode (Step S201).

If the router 30 receives a UDP packet for a predetermined port number when the home server 40 is in the electrical power saving mode, the router 30 determines that the packet with this port number needs to be sent to the home server 40 and sends the packet to the home server 40. Consequently, the LAN unit control unit 48 in the home server 40 receives a predetermined control packet (Yes at Step S202). Then, the authentication processing unit 51 performs authentication, by using the user ID and the password included in the control packet, whether the packet is sent from a normal user (Step S203). Furthermore, if the position of the offset "94" of the control packet, i.e., an area that specifies a startup target device or the like, is encrypted, the authentication processing unit 51 verifies an encryption key or a check digit. Specifically, there is a method of decoding the offset "94" and the subsequent offsets by using the encryption key that is previously registered for each user and then verifies the value of the check digit that is included in the result of the verification.

If the verification result indicates that the user is the registered user and the encryption key and the check digit are normal (Yes at S204), the control program execution unit 52 executes the registered control program (Step S205). In contrast, if the user is not the registered user or the encryption key and the check digit are not normal (No at Step S204), the process returns to Step S201 and then the process at Step S201 and the subsequent processes are repeatedly performed.

Thereafter, the LAN unit control unit 48 again receives the control packet in which the UDP port number is indicated (Yes at Step S206). The startup control unit 53 specifies a startup target on the basis of the control packet and the list DB 50 (Step S207). Here, it is assumed that the device A is specified as the startup target.

Subsequently, the startup control unit 53 sets an operation flag for the device A (Step S208). The reason for setting the operation flag as an internal flag is that, when multiple users access, the operations are set by using the OR condition. Namely, it is assumed that a user 1 requests the device A and a device B and it is assumed that a user 2 requests the device B and a device C. In such a case, the reason for this is that the startup control unit 53 starts up A+B+C and performs control such that, if the user 1 ends, the startup control unit 53 allows only A to be returned to the standby state and, if only the user 2 ends, the startup control unit 53 allows only C to be returned to the standby state. As an example of implementation, a user requests or information or the like related to an unneeded device is acquired from the control packet and updates the information to the internal flag. In the example illustrated in FIG. 6, this information is acquired from the "function flag" of the offset "94" in the control packet.

Then, the control program that has received the instruction from the startup control unit 53 executes, on the device A, the command that is specified by referring to the list 50 and starts up the device A (Step S209).

Thereafter, if the LAN unit control unit 48 receives a processing packet that includes therein a specific processing content (Yes at Step S210), the control program or the CPU 47 allows the device A to execute the process that is specified by the processing packet (Step S211).

Then, if the LAN unit control unit 48 receives a process-end packet indicating the end of the process (Yes at Step S212), the CPU 47 ends the device A, shifts the device A to the standby state (Step S213), and also ends the control program (Step S214).

### (Conventional sequence)

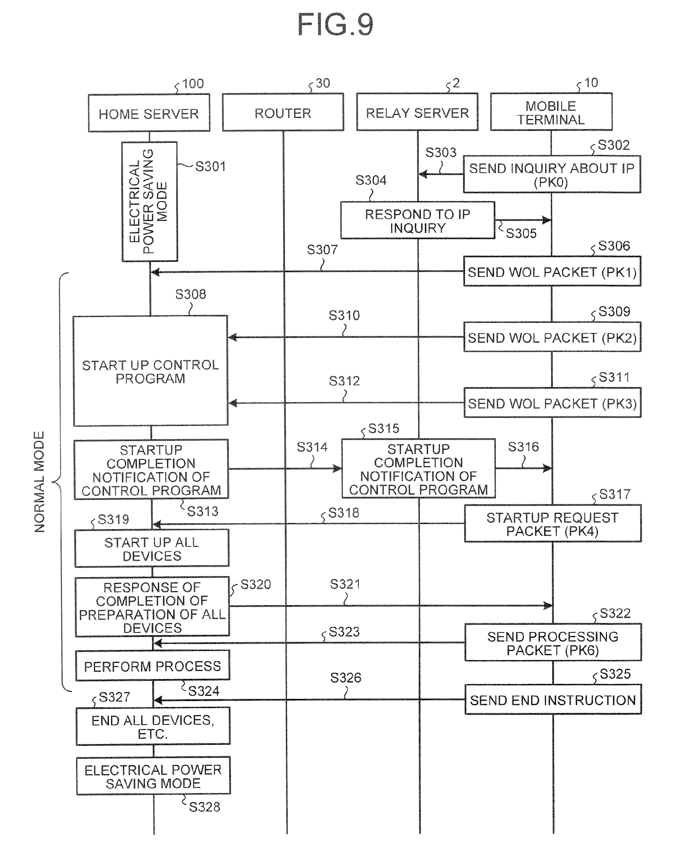

FIG. 9 is a sequence diagram illustrating the flow of a process according to a conventional technology. Here, a description will be given of the home server according to a conventional technology as a home server 100. Furthermore, as an example, a description will be given of an example in which a device Z is started up. As illustrated in FIG. 9, at first, the home server 100 waits in the electrical power saving mode (Step S301).

In such a state, the mobile terminal 10 sends, to the relay server 2, a packet (PK0) for inquiring a communication path (the IP address or the like) to the home server 100 (Steps S302 and S303). In response to the inquiry from the mobile terminal 10, the relay server 2 responds to the mobile terminal 10 about the IP address and the port number that are needed to access the home server 100 (Steps S304 and S305). This IP address is a global IP address that is normally held by the router 30 with respect to outside.

Then, the mobile terminal 10 creates a WOL packet that is used to allow the home server 100 to shift to a normal mode and sends this control packet.

Specifically, the mobile terminal 10 sends a WOL packet (PK1) (Steps S306 and S307). The home server 100 that received this WOL packet starts a startup of the control program (Step S308).

After a predetermined time period, the mobile terminal 10 again sends a WOL packet (PK2) (Steps S309 and S310). Because the home server 100 has already started the startup of the control program, the home server 100 ignores the PK2.

After further another predetermined time period, the mobile terminal 10 again sends a WOL packet (PK3) (Steps S311 and S312). In this case, because the home server 100 has also starts to a startup of the control program, the home server 100 ignores the PK3.

Then, if the startup of the control program has been completed, the home server 100 sends a startup completion notification of the control program to the relay server 2 and then the relay server 2 sends the notification to the mobile terminal 10 (Steps S313 to S316). When, as a trigger, the mobile terminal 10 has received the startup completion notification, the mobile terminal 10 sends, to the home server 100, a request packet (PK4) that instructs an operation from outside (Steps S317 and S318). Inside the home server 100, on the basis of this instruction, the startup of the needed device is requested. This request packet (PK4) instructs an outline of, for example, "the playback of video data" or the like, which is not a specific instruction, such as a playback file or channel.

In this way, the home server 100 receives the startup request packet (PK4) and starts up a needed device or the like (Step S319). Then, if the startup of the needed device or the like has been completed, the home server 100 sends, as a response, a preparation completion notification to the mobile terminal 10 (Steps S320 and S321).

Then, the mobile terminal 10 sends, to the home server 100, a processing packet (PK6) that includes therein specific content of processing using the device Z (Steps S322 and S323). The home server 100 executes the process instructed by the processing packet (PK6) by using the device Z that was started up at Step S317 (Step S324). This processing packet (PK6) is for a specific process (for example, receive the 031 channel) that uses the device Z (for example, a TV tuner) that has been prepared.

Then, if the mobile terminal sends an end instruction to the home server 100 (Steps S325 and S326), the home server 100 ends all of the devices that were used for the series of the processes (Step S327). Then, the home server 100 shifts to the electrical power saving mode that corresponds to the standby state (Step S328).

### [Advantage]

As described above, by using the control packet that is obtained by improving a WOL packet, the home server 40 according to the first embodiment can start up a control program or a needed device during the time period for which the same packet is mechanically sent for multiple times. Consequently, the home server 40 can shorten the time taken to start up the device or the like that is in the standby state. Furthermore, because a user does not need to patiently wait the home server 40 to be started up in order to start up the control program or a device immediately after a startup of the home server 40, the convenience for a user is improved.

Furthermore, as can be seen from the comparison between FIGS. 7 and 9, in the conventional technology, the side of the mobile terminal 10 instructs the startup target device after waiting for the completion of the startup of the home server 100 by using a WOL packet and, furthermore, sends a specific processing request after waiting for the completion of the startup of the instructed device. In contrast, the mobile terminal 10 according to the first embodiment can start up the control program or the target device only by sending a control packet including the startup target, if possible, only by sending a control packet including a specific processing request. Consequently, it is possible to greatly reduce the number of types of packets that are used to perform remote operation. Thus, the convenience for a user is improved.

Furthermore, in the conventional technology, in order to improve a response speed, when the home server 40 is started up by sending the WOL packet (PK(1)) from outside the home, all of the devices that are connected to the home server 40 and that are possibly and normally used are simultaneously stared up. In the conventional technology, the aim of the startup, i.e., the way to know the intention of the side that has sent the WOL packet (on the side of the mobile terminal 10), is unable to acquire. From the viewpoint of the electrical power saving, only the needed devices are preferably started up after a CPU unit was started up; however, if the target devices are started up by inquiring about the aim of a user who is outside the home, it takes a long time due to an inquiry and waiting for a response. In general, if the number of devices to be started up is great, because it takes a long time to perform a startup process, the startup time is longer than that performed by the home server 40 according to the first embodiment that can start up only a target device. Furthermore, in the conventional technology, because the startup and the end of all of the devices are repeated regardless of whether each of the devices is the processing target, the life of each of the devices is decreased. In contrast, because the home server 40 according to the first embodiment can start up only the target device, it is possible to suppress the degradation due to turning on and off the power supply.

### [b] Second Embodiment

In a second embodiment, a technology that previously starts up, on the basis of the schedule of a user, a device that is highly likely to be used is disclosed.

### (Functional configuration)

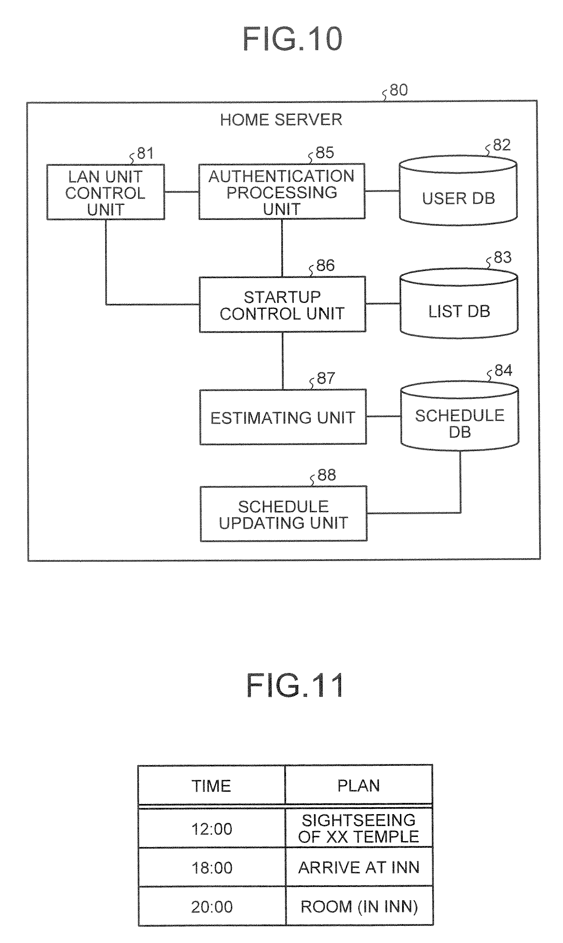

FIG. 10 is a functional block diagram illustrating the functional configuration of a home server according to a second embodiment. As illustrated in FIG. 10, a home server 80 includes a LAN unit control unit 81, a user DB 82, a list DB 83, and a schedule DB 84. Furthermore, the home server 80 includes an authentication processing unit 85, a startup control unit 86, an estimating unit 87, and a schedule updating unit 88.

For the processing units that execute the same functions as those executed in the first embodiment or for the storing units that store therein the same information as that described in the first embodiment, descriptions thereof in detail will be omitted. Specifically, the LAN unit control unit 81 executes the same function as that performed by the LAN unit control unit 48 illustrated in FIG. 4. The user DB 82 stores therein the same information as that stored in the user DB 49 illustrated in FIG. 4. The list DB 83 stores therein the same information as that stored in the list DB 50 illustrated in FIG. 4. The authentication processing unit 85 executes the same function as that performed by the authentication processing unit 51 illustrated in FIG. 4.

The schedule DB 84 is a database that stores therein a user's schedule. FIG. 11 is a schematic diagram illustrating an example of information stored in a schedule DB. As illustrated in FIG. 11, the schedule DB 84 stores therein, in an associated manner, the "time and a plan". The "time" stored here indicates the estimated time at which the schedule is performed and the "plan" indicates a plan of the schedule performed by a user. The example illustrated in FIG. 11 indicates that the user plans to see the sights of the XX temple at 12:00, arrive at an inn by 18:00, and relaxes at the inn at 20:00.

In the following, in the second embodiment, a description will be given of an example in which the schedule DB 84 is provided in the home server 80; however, the configuration is not limited thereto. For example, the schedule DB 84 may also be provided on the Internet in which the home server 40 can communicate. Furthermore, if the schedule updating unit 88, which will be described later, is periodically updated or is updated, the home server 40 may also acquire the schedule stored in the storage on the Internet and store the schedule in the schedule DB 84.

The startup control unit 86 is a processing unit that performs the same function as that performed by the startup control unit 53 illustrated in FIG. 4 and that starts up a device or the like notified by the estimating unit 87. Specifically, the startup control unit 86 receives the ID of the startup target device from the estimating unit 87, specifies the command associated with the received ID from the list DB 83, and performs the command. Furthermore, the startup control unit 86 performs, as needed, the authentication of a check digit or an encryption key.

The estimating unit 87 is a processing unit that estimates, if a control packet is received, in accordance with a user's schedule stored in the schedule DB 84, a device or an application that is highly likely to be started up. Specifically, if a control packet is received by the LAN unit control unit 81, the estimating unit 87 searches the schedule DB 84 by using the time of the control packet as a key. Here, it is assumed that the schedule of "sightseeing of the XX temple at 12:00" has been searched.

Then, the estimating unit 87 determines that there is a high possibility, from the "sightseeing of the XX temple, that pictures are taken by a digital camera and are stored and thus notifies the startup control unit 86 of a "startup of an HDD (ID=41) at 12:00". The startup control unit 86 specifies a startup command on the basis of the ID notified in this way, executes the specified startup command, and starts up the HDD. Furthermore, the association of the ID and a device or the like may also be previously stored by the estimating unit 87 or stored in another DB.

In the following, a description will be given of an example in which a startup target is specified from the content of a plan of a schedule. For example, by associating a keyword with a device or the like, the estimating unit 87 can specify a startup target device or the like from a plan of a schedule. Specifically, the estimating unit 87 stores therein association information related to "a keyword and device, etc.", such as "photography and the HDD (ID=41)", "the real time and an SNS application (ID=90)", "picture recording/relaxation and the HDD (ID=41)/the recorded application (ID=88)", or the like.

Then, the estimating unit 87 reads the text or the like stored in the "plan" in the schedule DB 84, executes the morphological analysis or the like, and extracts words. Thereafter, the estimating unit 87 searches for the association information described above by using each of the extracted words as a key. Here, if it is assumed that the estimating unit 87 specifies the combination of "HDD (ID=41)/recorded application (ID=88)" as the target device, the estimating unit 87 notifies the startup control unit 86 of the ID=41 and the ID=88.

The method described here is only an example and the embodiment is not limited thereto and a known character recognition technology or the like may be used. Furthermore, as an example of implementation of the startup control unit 86 and the estimating unit 87 described above, when a startup is performed after the home server 80 was in the electrical power saving mode, the control program estimates, on the basis of the schedule, a device or the like that is likely to be used. Then, another control program executes the estimated device or the like.

A description will be given here by referring back to FIG. 10. The schedule updating unit 88 is a processing unit that updates the schedule DB 84. Specifically, the schedule updating unit 88 receives an access from the mobile terminal 10 or the like and updates the schedule DB 84. Furthermore, the schedule updating unit 88 reads a schedule from storage or the like on the Internet and updates the schedule DB 84 to the read schedule.

### (Flow of a process)

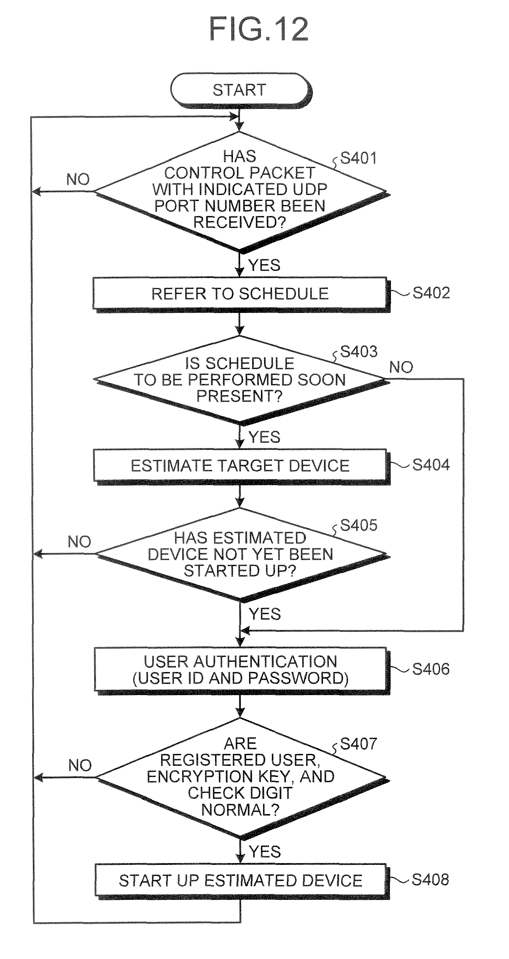

FIG. 12 is a flowchart illustrating the flow of an estimating process performed by a device or the like according to the second embodiment. As illustrated in FIG. 12, if a UDP packet with a predetermined port number is received (Yes at Step S401), the estimating unit 87 refers to the schedule by using the time of receipt as a key (Step S402). Then, the estimating unit 87 determines whether a schedule occurring within a predetermined time period after the time of receipt, i.e., determines whether a schedule to be performed soon is present (Step S403).

If there is a schedule that is to be performed soon (Yes at Step S403), the estimating unit 87 reads the "plan" of the target schedule and estimates a device or the like that is likely to be started up (Step S404).

Thereafter, if the device or the like is estimated, the estimating unit 87 determines from, for example, the state of the history of an issued command, the state of the power supply or the like of each of the devices whether the estimated device or the like has not yet been started up (Step S405). Then, if the estimating unit 87 determines that the estimated device or the like has not yet been started up (Yes at Step S405), by using the user ID and the password included in the received packet, the authentication processing unit 85 performs authentication whether a packet is sent from a normal user (Step S406).

Subsequently, if the user is the registered user and the encryption key and the check digit are normal (Yes at Step S407), the startup control unit 86 starts up the estimated device (Step S408). For example, if a description will be given of an example of implementation, the control program A that is executed by the CPU sets the operation flag of the estimated device to ON and another control program B executed by the CPU starts up the device in which the operation flag is set to ON.

Furthermore, at Step S403, if there is no upcoming schedule (No at Step S403), the process at Step S406 is performed after the process at Step S403. Furthermore, if the estimating unit 87 determines that the estimated device or the like has already been started up (No at Step S405), the process returns to Step S401 and then the process at Step S401 and the subsequent processes are repeatedly performed. Similarly, if a user is not the registered user or the encryption key and the check digit are not normal (No at Step S407), the process returns to Step S401 and then the process at Step S401 and the subsequent processes are repeatedly performed.

### (Advantage)

As described above, the home server 80 according to the second embodiment can also refer to the schedule of a device or an application that is used by a user, and therefore it can also estimate the device or the application that is to be started up next. Furthermore, the home server 80 can return to a normal operation even if data in a terminal memory is lost due to a power failure for a long time.

For example, a description will be given, as an example of the schedule, of an example of a case of "arriving at a picturesque place around 12:00 and taking photographs. Arriving at the inn around 18:00 and relaxing around 20:00". For a startup request at around 12:00, the home server 80 executes an application A and starts up the NAS in order to receive capturing data. For a startup request around 20:00, the home server 80 can perform control so as to start up a TV tuner or an HDD for picture recording in order to view the TV program of the local TV station that can be received in the vicinity of the user's home.

As described above, by using a schedule, the home server 80 can be aware of a use plan of a user and can perform further appropriate operation. Furthermore, even in a case of not acting as planned due to transportation conditions or the like, it is possible to estimate the subsequent operation content or approximate time on the basis of the order described in the schedule or time intervals. For example, it is assumed that, a user plans to leave the inn at 9:00 but the departure is delayed and thus an access from the inn is performed until around 10:00. At this time, if the estimated time at which the user arrives at the subsequent picturesque place was around 12:00, the home server 80 can alternatively read the state as around 13:00.

In this way, the home server 80 can make preparations by expecting a device or the like that is likely to be used next and starting up the device in advance before a startup request is actually delivered or can make preparations by allowing the device to be in the standby state and to perform a fast startup when the startup request is actually received.

In the second embodiment, a description has been given of an example of performing estimation by using the control packet as a trigger; however, the configuration is not limited thereto. For example, the estimating unit 87 may also periodically refer to the schedule DB 84 and may perform the estimating process described above when the estimating unit 87 has detected the schedule that is performed within a predetermined time period after the current time at which the schedule DB 84 was referred to.

### [c] Third Embodiment

In a third embodiment, a technology is such that counts the statistics of the number of received packets and that start or stop the home server itself, a device, or the like on the basis of the statistics.

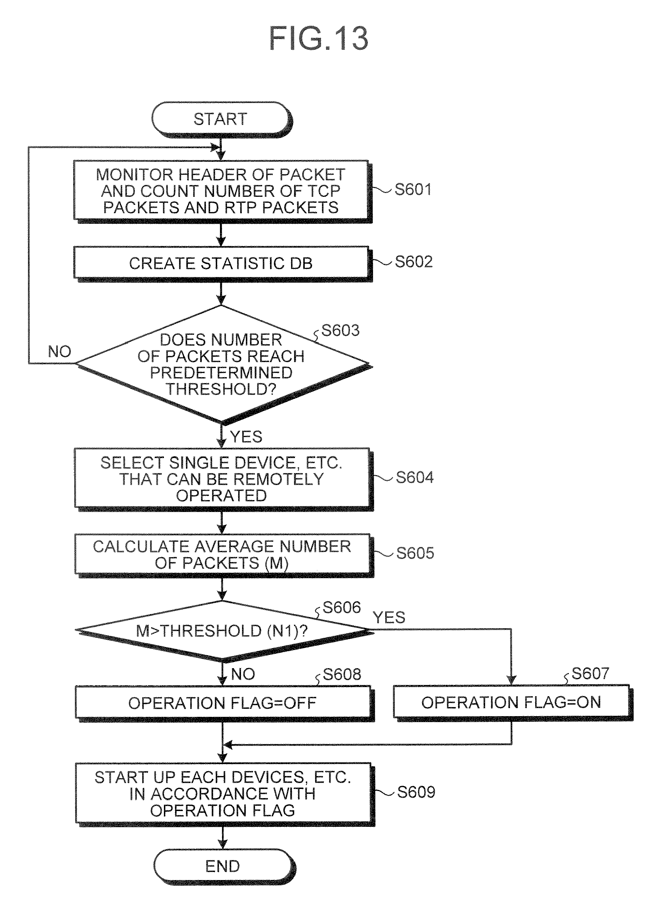

FIG. 13 is a flowchart illustrating the flow of a process performed by a home server according to a third embodiment. As illustrated in FIG. 13, the CPU 47 in the home server 40 monitors the header of the packet received by the LAN unit 41 in the home server 40 and counts the number of TCP packets and real-time transport protocol (RTP) packets (Step S601). Then, the CPU 47 in the home server 40 creates a statistic DB (Step S602).

Here, the home server 40 has a function of checking the IP address of the send source or the destination port number included in the packet, the type, the amount, and the content of the sent data and has a function of measuring for each port number or packet type.

Subsequently, if the number of packets with a specific port number or with a specific packet type reaches a predetermined threshold (Yes at Step S603), the CPU 47 in the home server 40 selects an associated device or the like that can be remotely operated (Step S604). Specifically, the CPU 47 selects a device stored in the list DB 50 or the like and allows the selected device to enter the startup state. If the number of packets does not reach the predetermined threshold (No at Step S603), the process returns to Step S601 and then the process at Step S601 and the subsequent processes are repeatedly performed.

A specific example of implementation is as follows. For the packet type that is associated with a certain device or the like, the CPU 47 in the home server 40 calculates the average number of packets (M) per second from the number of packets received in the past 10 seconds (Step S605) and determines whether the average number of packets (M) is greater than a threshold (N1) (Step S606). Instead of the average number of packets, the total number of packets received for 10 seconds or for the most recent one second may also be compared with another threshold.

If the average number of packets (M) is greater than the threshold (N1) (Yes at Step S606), the CPU 47 in the home server 40 sets the operation flag of the device or the like that is being selected to ON (Step S607). In contrast, if the average number of packets (M) is equal to or less than a threshold (N0) (No at Step S606), the CPU 47 in the home server 40 sets the operation flag of the device or the like that is being selected to OFF (Step S608).

Another control program starts up each of the devices or the like in accordance with the set operation flag (Step S609). For example, from among the devices in each of which the operation flag is set to ON, the CPU 47 starts up devices that have not yet been started up. Furthermore, from among the devices in each of which the operation flag is set to OFF, the CPU 47 stops devices that have already been started up.

As described above, the home server 40 according to the third embodiment controls the startup or the stop of devices or the like on the basis of the statistics of the packets sent by the mobile terminal 10 or the like. Consequently, the home server 40 can start up devices or the like that are frequently used and can stop devices or the like that are less likely to be used. Accordingly, the home server 40 according to the third embodiment can suppress electrical power consumption.

### [d] Fourth Embodiment

With recent notebook computers or the like, control is performed such that high-speed operation is performed when electrical power is supplied from a power supply adapter and low-speed operation is performed when electrical power is not supplied from the power supply adapter. By applying this, the previous embodiment can be effectively implemented. A fourth embodiment is such an embodiment and is an example of controlling, with the assumption that the home server 40 is a notebook computer, an electrical power supply from a power supply adapter on the basis of an amount of received packets. This will be described below.

### (Configuration)

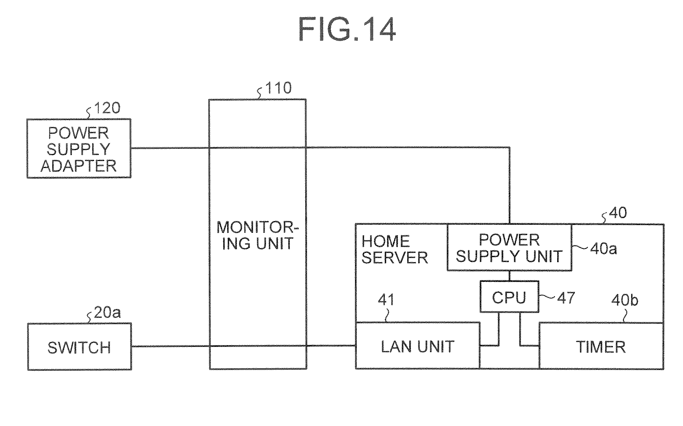

FIG. 14 is a schematic diagram illustrating an example of the overall configuration of a system including therein a home server according to a fourth embodiment. As illustrated in FIG. 14, the home server 40 includes a power supply unit 40a, the LAN unit 41, and a timer 40b. Here, to simplify the explanation, the power supply unit 40a, the LAN unit 41, the timer 40b, and the CPU 47 are illustrated; however, it is assumed that the home server 40 includes the same hardware as that described in the first embodiment.

The power supply unit 40a includes an internal battery or an own power supply corresponding to the internal battery and is connected to a power supply adapter 120 via a monitoring unit 110. Furthermore, the LAN unit 41 is connected to the switch 20a via the monitoring unit 110. The power supply adapter 120 is an electrical power supply that supplies electrical power to the power supply unit 40a. The switch 20a is a relay device that relays a packet between an external device and the home server 40.

The monitoring unit 110 is a processing unit that controls an electrical power supply from the power supply adapter 120 to the power supply unit 40a in accordance with a condition. This functions as a device that controls an external power supply of a notebook PC. Namely, the monitoring unit 110 mediates a cable for a LAN port and also mediates a power supply cable from the power supply adapter. Furthermore, the monitoring unit 110 is a processing unit that monitors an IP communication packet sent from the switch 20a to the LAN unit 41 and that counts the number of packet types or packets. The monitoring unit 110 independently includes a CPU and a memory or the like related to the operation of the CPU and is configured such that the monitoring unit 110 can execute a programmed control process.

Furthermore, recent notebook PCs have a mechanism of monitoring the remaining amount of an internal battery and performing a predetermined operation when the capacity of the internal battery is decreased. In an example of a normal use, a PC is shifted to a low electrical power mode or a standby state; however, a particular program may also be executed. If the embodiment is used, when the remaining amount of the internal battery embedded in the power supply unit 40a is decreased, the PC (i.e., the home server 40 illustrated in FIG. 16) detects this state and sends, from the LAN unit 41, a predetermined IP packet by executing a program that is used to support the embodiment. This IP packet is identified by the monitoring unit 110 and the monitoring unit 110 determines that a power supply needs to be supplied in order to charge the internal battery in the home server 40. This is natural implementation generated from the implementation of the present invention and is one of natural effects of the present invention.

### (Flowchart)

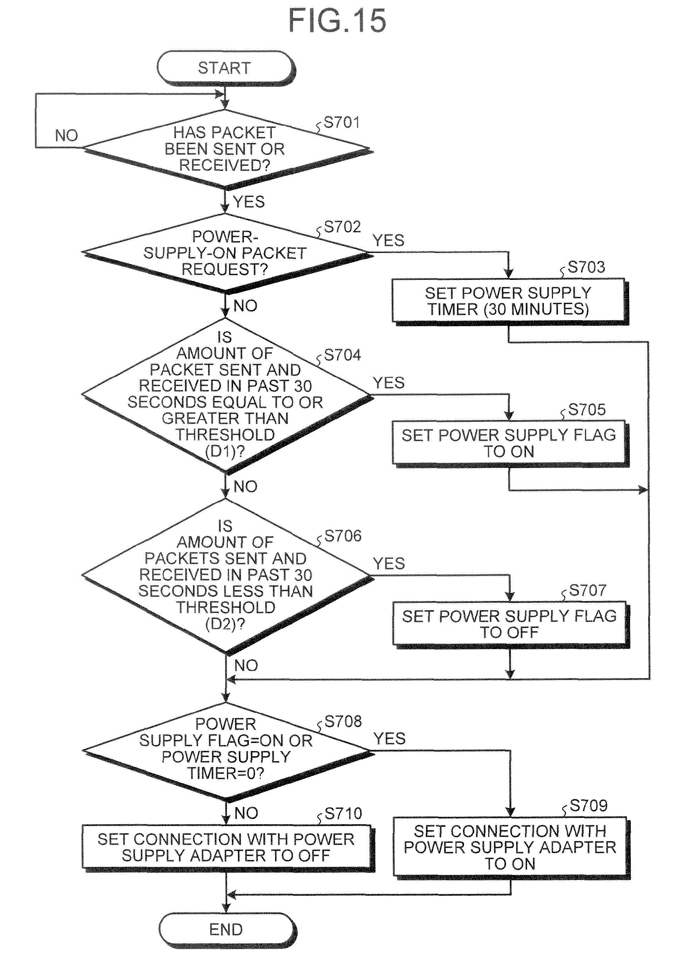

FIG. 15 is a flowchart illustrating the flow of a power supply process performed by a monitoring unit according to the fourth embodiment. As illustrated FIG. 15, when the LAN unit 41 sends or receives a packet (Yes at Step S701), the CPU in the monitoring unit 110 refers to the header, the payload, or the like of the packet and determines whether the packet requests a power supply to be turned ON (Step S702).

Specifically, it is conceivable to monitor a real-time transport protocol (RTP) packet that is used when voice or video data is sent; it is conceivable to identify and monitor an RTP control protocol (RTCP) packet that is used to monitor and control the RTP packet; and it is conceivable to simply monitor communication traffic of a UDP/TCP packet with respect to a specific port number.

The CPU in the monitoring unit 110 monitors IP communication performed between the LAN unit 41 and the switch (hub, router) 20a. If the packet sent from the LAN unit 41 is a predetermined IP packet indicating that home server 40 has detected a decrease in the remaining amount of the internal battery (Yes at Step S702), the CPU starts up the timer 40b (Step S703). For example, the CPU 47 sets a timer at, for example, 30 minutes.

Furthermore, the CPU in the monitoring unit 110 monitors a communication packet related to a function expected by the home server 40. When video data is sent and received, it is conceivable that a communication packet sent from outside or a communication request packet is sent as an RTP or an RTCP packet. In the following, a description will be given with the assumption that the CPU monitors the RTP packet or the RTCP packet. This is only an example of the implementation and is not limited. It is conceivable to use a method, as an example of practical implementation, that can define or change in accordance with an instruction from the home server 40.

In contrast, if a packet is not a packet that requests for a power supply to be turned ON (No at Step S702), the CPU in the monitoring unit 110 monitors and counts the amount of communication packets, such as RTPs, RTCPs, or the like, as monitoring target packets; and determines whether the amount of the packets that were sent and received in the past 30 seconds is equal to or greater than a threshold (D1) (Step S704).

If the amount of the packets that were sent and received in the past 30 seconds is equal to or greater than the threshold (D1) (Yes at Step S704), the CPU in the monitoring unit 110 sets the power supply flag to ON (Step S705). In contrast, if the amount of the packets that were sent and received in the past 30 seconds is less than the threshold (D1) (No at Step S704), the CPU in the monitoring unit 110 determines whether the amount of the packets that were sent and received in the past 30 seconds is less than a threshold (D2) (Step S706). Here, the state is assumed to be D1>D2.

If the amount of the packets that were sent and received in the past 30 seconds is less than the threshold (D2) (Yes at Step S706), the CPU in the monitoring unit 110 sets the power supply flag to OFF (Step S707).

If the amount of the packets that were sent and received in the past 30 seconds is not less than the threshold (D2) (No at Step S706) or, after the process at Step S707 has been performed, if the power supply flag is set to ON or if the power supply timer is 0 (Yes at Step S708), the CPU in the monitoring unit 110 sets the connection between the power supply adapter 120 and the power supply unit 40a to ON and starts a supply of the power supply from the power supply adapter 120 (Step S709).

In contrast, if the power supply flag is not ON and the power supply timer is not 0 (No at Step S708), the CPU in the monitoring unit 110 sets the connection between the power supply adapter 120 and the power supply unit 40a to OFF and suppresses the supply of the power supply from the power supply adapter 120 (Step S710). Consequently, the home server 40 is operated by the internal battery.

### (Advantage)

As described above, during the time period for which a packet that requests a supply of the power supply is not sent and received, the home server 40 according to the fourth embodiment can control, by using the monitoring unit 110, an electrical power supply from the power supply adapter in accordance with an amount of packets sent and received. Consequently, the home server 40 can promptly detect the timing of shifting to the electrical power saving mode and can promptly shift to the electrical power saving mode. Normally, it is usually possible for a notebook computer or the like to generate an interrupt or an event when the capacity of a battery drops. Accordingly, the home server according to the fourth embodiment can start an electrical power supply from the power supply adapter 120 by sending a communication packet that generates such an event.

### [e] Fifth Embodiment

In the above explanation, a description has been given of the embodiments according to the present invention; however, the present invention may also be implemented with various kinds of embodiments other than the embodiments described above. Therefore, another embodiment will be described below.

### (Packet)

The above description of the embodiments showed an improved WOL packet as an example of a control packet; however, the embodiments are not limited thereto. In practice, there is a known example of disclosed technology in which a communication packet, such as an address resolution protocol (ARP) request packet, that is not a WOL packet is used to start up a system. It may also possible to use a unique packet that can be used in such a system.

### (Combination of the embodiments)

Furthermore, in each of the embodiments, each of the embodiments may also separately be implemented or may also be implemented in combination. For example, the second embodiment or the third embodiment may also be used for a home server that is in a state in which the control program is started up in the state of the first embodiment. Furthermore, the third embodiment may also be applied to a home server that performs the function described in the second embodiment. Namely, for the second embodiment to the fourth embodiment, devices or the like may also be started up by using the control program described in the first embodiment.

### (Target apparatus)

Furthermore, in each of the embodiments, a description has been mainly given of an example in which the devices are started up or stopped; however, the embodiments are not limited thereto. For example, the same process can be performed on, as the control target, applications, processes, functions, or the like that can be controlled based on a command. In this case, although electrical power consumption or improvement of the life for each device is small, the time taken for a response in terms of a user who operates a mobile terminal or the operability is effectively improved.

### (System)

Of the processes described in the embodiments, the whole or a part of the processes that are mentioned as being automatically performed can also be manually performed, or the whole or a part of the processes that are mentioned as being manually performed can also be automatically performed using known methods. Furthermore, the flow of the processes, the control procedures, the specific names, and the information containing various kinds of data or parameters indicated in the above specification and drawings can be arbitrarily changed unless otherwise stated. Furthermore, the components of each device illustrated in the drawings are only for conceptually illustrating the functions thereof and are not always physically configured as illustrated in the drawings.

### [Explanation of Reference]

40 home server
41 LAN unit
42 optical drive device
43 graphic interface
44 HDD
45 USB interface
46 RAM
47 CPU
48, 81 LAN unit control unit
49, 82 user DB
50, 83 list DB
51, 85 authentication processing unit
52 control program execution unit
53, 86 startup control unit
84 schedule DB
87 estimating unit
88 schedule updating unit

## Claims

1. An information processing apparatus comprising:
a receiving unit that receives, in a state of an electrical power saving mode that limits a function, a control packet that includes therein control information indicating a device or an application that is a startup target by an arbitrary number of times within a predetermined time period;
a first startup control unit that starts up, when the control packet is received by the receiving unit, a control program that starts up each device or each application; and
a second startup control unit that starts up, by using the control program when the receiving unit receives the control packet after the control program is started up by the first startup control unit, the device or the application that is the startup target specified by the control information included in the control packet.

2. The information processing apparatus according to claim 1, further comprising an estimating unit that estimates, from schedule information related to a user of the information processing apparatus, a device or an application that is planned to be started up, wherein
the second startup control unit starts up, by using the control program, the device or the application estimated by the estimating unit.

3. The information processing apparatus according to claim 1, further comprising a counting unit that counts, for each destination or each function, packets received within the predetermined time period, wherein
the second startup control unit starts up, by using the control program, a device or an application that has not yet been started up from among devices or applications in which total number of the packets counted by the counting unit is equal to or greater than a predetermined value.

4. The information processing apparatus according to claim 1, further comprising:
a counting unit that counts number of outgoing or incoming packets that are sent or received within the predetermined time period; and
a power supply control unit that starts, when the number of packets counted by the counting unit is equal to or greater than a first threshold, a supply of a power supply to the information processing apparatus from a power supply adapter that is provided outside the information processing apparatus and that disconnects, when the number of packets counted by the counting unit is less than a second threshold, the supply of the power supply from the power supply adapter to the information processing apparatus.

5. An information processing apparatus comprising:
an estimating unit that estimates, from schedule information related to a user, a device or an application that is planned to be started up; and
a startup control unit that starts up the device or the application estimated by the estimating unit.

6. The information processing apparatus according to claim 5, further comprising a counting unit that counts, for each destination or each function, packets received within a predetermined time period, wherein
the startup control unit starts up a device or an application that has not yet been started up from among devices or applications in which total number of the packets counted by the counting unit is equal to or greater than a predetermined value.

7. The information processing apparatus according to claim 5, further comprising:
a counting unit that counts number of packets that are sent and received within the predetermined time period; and
a power supply control unit that starts, when the number of packets counted by the counting unit is equal to or greater than a first threshold, a supply of a power supply to the information processing apparatus from a power supply adapter that is provided outside the information processing apparatus and that suppresses, when the number of packets counted by the counting unit is less than a second threshold, the supply of the power supply from the power supply adapter to the information processing apparatus.

8. A startup control program that causes a computer to execute a process comprising:
receiving, in a state of an electrical power saving mode that limits a function, a control packet that includes therein control information indicating a device or an application that is a startup target by an arbitrary number of times within a predetermined time period;
starting up, when the control packet is received, a control program that starts up each device or each application; and
starting up, by using the control program when the control packet is received after the control program is started up, the device or the application that is the startup target specified by the control information included in the control packet.

9. A startup control program that causes a computer to execute a process comprising:
estimating, from schedule information related to a user, a device or an application that is planned to be started up; and
starting up the estimated device or the application.
